# EUROPEAN PATENT SPECIFICATION

(11) **EP 3 333 553 B1**
(45) Date of publication and mention of the grant of the patent: **04.12.2019**
(21) Application number: 17206470.1
(22) Date of filing: 11.12.2017
(51) Int. Cl.: B65B 37/08, B65B 37/10, B65B 37/20, B65B 39/00, G01F 11/24, G01F 13/00

(54) **CONTINUOUS METERING VOLUMETRIC VALVE**
KONTINUIERLICHES DOSIERVOLUMENVENTIL
SOUPAPE VOLUMÉTRIQUE DE DOSAGE CONTINU

(30) Priority: 12.12.2016 IT 201600125135
(43) Date of publication of application: 13.06.2018
(73) Proprietor: STERIVALVES S.R.L., 55100 Lucca (LU) (IT)
(72) Inventor: Nelli, Gianfranco, 55100 Lucca (LU) (IT); Pieri, Luciano, 55100 Lucca (LU) (IT)
(74) Representative: Fanfani, Stefano

(56) References cited:
- EP-A1- 0 331 271
- EP-A2- 1 022 221
- WO-A1-2015/091162
- WO-A2-2008/029431
- US-A- 4 572 060
- US-A- 5 871 081

## Description

### Technical field

The present invention refers to the field of the metering devices for the pharmaceutical, chemical, and food industries.

More specifically, the valve according to the present patent application belongs to the sector of the metering devices used for a controlled delivery and volumetric metering of loose solid products, such as powder or granular products.

These metering devices are mainly used in the pharmaceutical industry, in the food industry, and in the chemical industry, hence they shall feature an accurate metering as well as absence of contaminations in the metered material, as much as possible.

### Present status of the art

Metering devices are known for loose solid products which are formed of a box-like body which accommodates a rotor keyed on a horizonal shaft internally thereto. The box-like body includes an upper port for receiving the product and a lower port for delivering it. The internal rotor includes a number of compartments featuring a V-shaped cross-section and is rated in such a way that its outer profile is very close to the inner surface of the box-like body, to make it possible for the product to pass through the metering valve and enter first a compartment facing upwards, which is located in the upper part of the rotor, and subsequently to leave it by gravity after the rotor completes half revolution, the same compartment being in the lower part, facing downwards.

The angular speed of the rotor is usually rather low, to give time to the product to fill the compartment underneath, therefore these devices shall have compartments of sufficiently large dimensions as to provide for non-excessive transfer times; however, this requirement is contrary to the need for performing accurate meterings, whereby it is necessary to handle small volumes of product whenever the requested quantity to be metered is going to be reached.

In order to obviate this drawback, volumetric valves have been set up, comprising a big-size main rotor and a smaller secondary rotor, used to perform the final precision metering. An example is illustrated in EP1022221, which proposes first and second closure means co-operating with each other to reversibly close a passage section.

These devices are usually configured in such a way that both rotors, in one or more predetermined angular positions, completely close their respective passage section of the product to be metered, which means that the valve does not perform the metering functions only, but it is also capable of intersecting the flow of the product.

However, these solutions are not free from problems either, because the weighing accuracy of the fine metering performed by the secondary rotor decreases as the specific weight of the product increases.

### Objects and summary of the invention

A first object of the present invention is to provide a metering device for loose solid materials that guarantees a high accuracy.

A further object is to provide a device that is simple and cost-effective to manufacture.

Another object of the present invention is to provide a metering device that can be easily disassembled without any need for using special tools.

A last but not least object of the present invention is to provide a precision metering device that is also capable of performing a product intercepting function.

These objects and others which will be apparent to the persons skilled in the art from reading the following disclosure are achieved by a valve of an innovative type which comprises a vertical tubular body whose upper flange is usually connected to the lower end of a product feeding pipe.

The lower portion of the tubular body is transversally crossed by a main rotor which comprises a hollow shaft, rotationally connected to the tubular body, from the lateral surface of which two or more lobes protrude; at least one of the compartments defined by the two successive lobes includes an opening which puts it in communication with the inner cavity of the shaft, the latter usually features a cylindrical shape and receives internally thereto a metering screw which receives the product from this opening whenever it is in an above position and, by rotating, makes it move forward until the end of the cavity; in the lower portion of the latter there is opened at least one outlet port from which the product comes out, after crossing at least one of the lower compartments of the rotor.

The rotational couplings include friction reduction means of a known type, such as roller bearings.

In this way, the rotation of the metering screw induces a progressive transfer of the product, up to reaching the predetermined quantity; the latter is usually signaled by weighing devices which continuously record the variable change of the container that receives the product.

The rotation of the main rotor induces a transfer of big quantities of the product, unlike the metering screw, whose progressive rotation induces a continuous transfer of small quantities of the product, thus allowing for a precision metering.

The movement of the main rotor takes place thanks to external driving means of a known type, not necessarily continuous rotation means but also means of a reversible actuator type. The rotation of the metering screw can be controlled independently, thanks to driving means of a known type.

In an embodiment, the metering screw occupies the inner cavity of the main rotor almost completely and the outlet port is underneath the end portion of the metering screw; in this configuration, the device according to the present patent application operates as a continuous metering device, but not the interceptor function, because a particularly smooth-flowing material might flow along the metering screw up to reaching the outlet port.

In a more sophisticated embodiment, the metering screw and the rotor are coaxial to each other and, thanks to the interposition of a freewheel device, it is possible to control both of them with one and the same driving device of a type capable of changing its sense of rotation; if the driving device is integrally connected to the shaft of the metering screw, then, whenever the latter is made rotate in the direction that does not make the product move forward toward the outlet port, the shaft of the metering screw transmits motion to the main rotor; then, upon inverting the sense of rotation, the freewheel device does not transmit motion to the rotor any longer, but the metering screw only keeps rotating in the direction that makes it possible for the product to continuously move forward. In this embodiment, the driving device occupies one side only of the valve.

In a more complete embodiment, the device is also capable of intercepting the flow of the product; in the latter configuration the inner cavity of the main rotor is longer than the metering screw and consequently a cylindrical volume remains between the end of the metering screw and the end portion of the cavity that faces it, so as to define an outlet chamber, in the lower portion of which the outlet port opens. At least one interception element is provided between the input to the chamber and the outlet port, to prevent the product from flowing through.

According to a preferred embodiment, that portion of the inner cavity of the rotor which is opposed to that which receives the metering screw accommodates a piston, whose axis of movement is parallel to the axis of the rotor; this piston, whose head faces the free end of the metering screw, is reversibly movable between a retracted outlet position and an extended closing position.

Upon moving from the retracted outlet position to the extended closing position, the head of the piston axially crosses the outlet chamber up to getting in contact with the free end of the metering screw, so as to isolate it from the outlet port and prevent the product from flowing out.

When the piston moves to its retracted outlet position, its head is located at the end of the outlet chamber opposed to the metering screw, so that the outlet chamber can be crossed by the product, which is pushed thereto by the metering screw, so that it can go out from the outlet port unhindered.

In order to improve the tightness of the device, it is very advantageous to interpose elastomeric gaskets between the individual components; for instance, a toroidal gasket might be embedded in the tubular body, by accommodating it in a circumferential recess located in correspondence with the axis of the rotor, so that it elastically interferes with the outer perimeter of two opposed lobes whenever the latter are arranged transversally to the longitudinal axis of the valve, thus preventing the product from leaking between the rotor and the inner wall of the tubular body.

In a particularly accurate embodiment, one pair only of lobes, diametrically opposed to each other, have such diameter as to interfere with the toroidal gasket, whereas the remaining lobes have slightly smaller dimensions and such as not to interfere with the gasket whenever the rotor is rotating.

A gasket can also be accommodated on the head of the piston to seal the closure of that portion of the inner cavity which receives the metering screw; a toroidal gasket might be mounted on the shaft of the metering screw to prevent the product from reaching the seat of the freewheel or of the bearing.

In a preferred embodiment, the couplings are implemented by clamping collars of a type that can be opened and closed manually, so that the entire valve can be removed from the plant and even opened without the need for using any tools.

### Brief description of the drawings

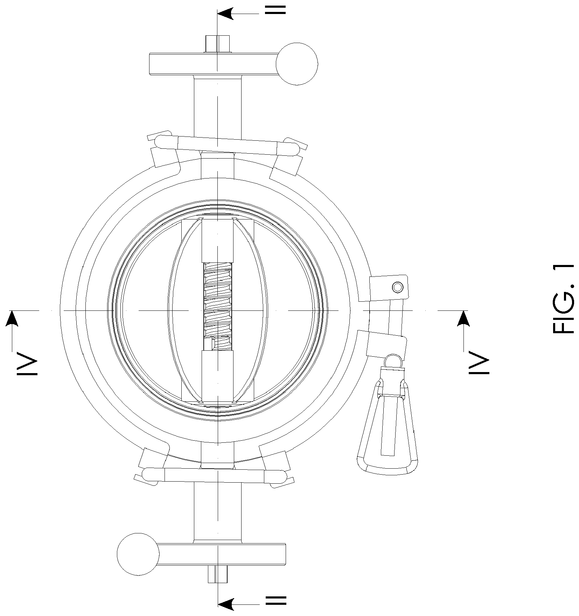

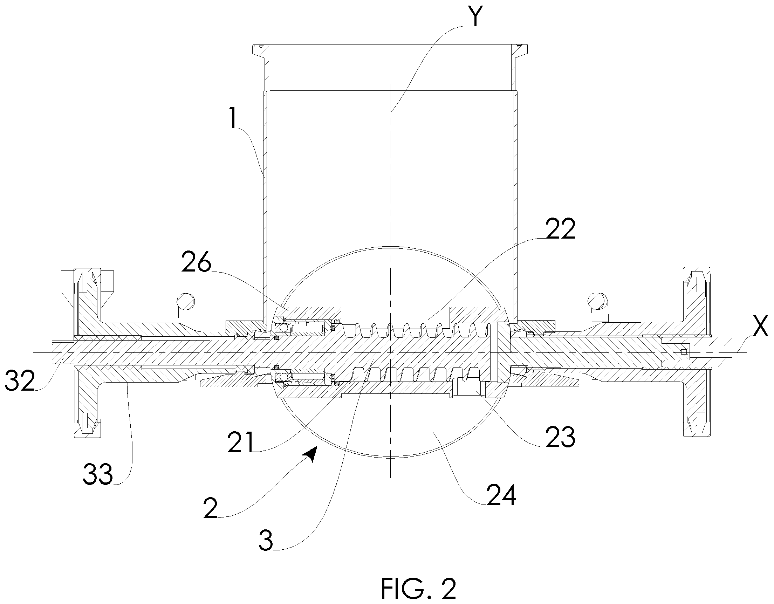

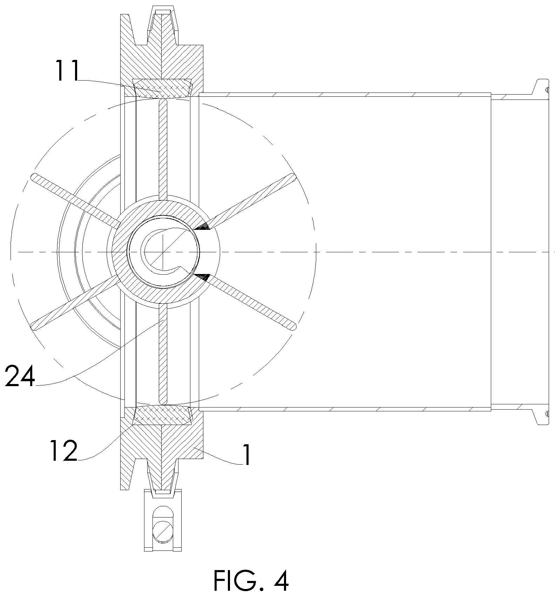

**Figure 1** shows a top view of a possible embodiment of the valve according to the present patent application; the intersections of the cutting planes of Figure 2 and of Figure 4 are visible therein.
**Figure 2** shows a cross-section of the valve of figure 1, cut according to a vertical plane passing through the (X) axis of a rotor (2); the figure shows a tubular body (1) and the rotor (2), of which there are visible some lobes (24) and the inner cavity (21), which is located in the position wherein the axis of the upper inlet port (22) and of the lower outlet port (23) are vertical; internally to the cavity (21) a metering screw (3) is visible, whose driving shaft (32) goes out on the left-hand side of the figure after crossing a hollow support (33), whereas the driving shaft (26) of the rotor (2) goes out on the righthand side.

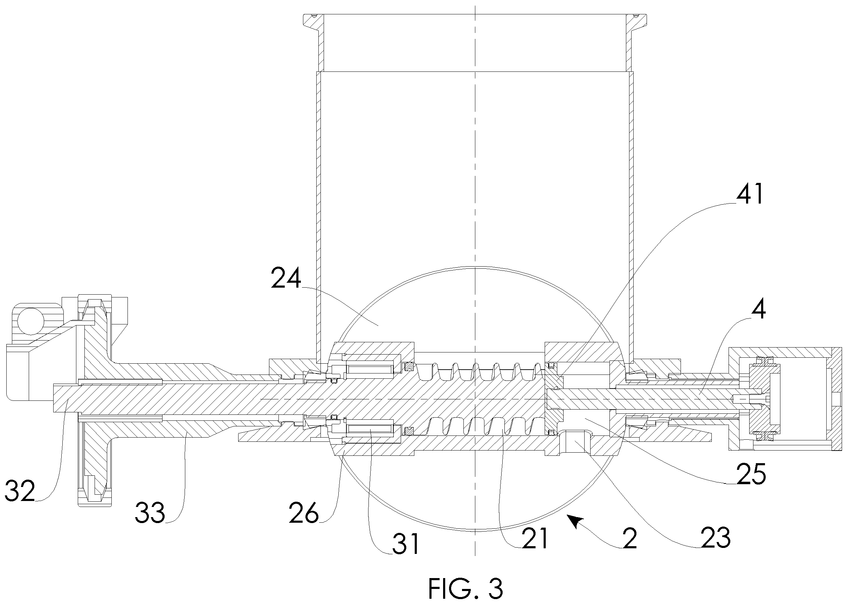

**Figure 3** shows a cross section of a second possible embodiment, cut according to a vertical plane passing through the (X) axis of the rotor (2), in this configuration the valve according to the present patent application is capable of intercepting the flow of the product, besides metering it. In this configuration, the metering screw is shorter than in the previous configuration and does not extend up to the end portion of the cavity (21); the outlet chamber (25) is visible, the head (41) of the piston (4) being in the extracted closing position.
   In this case the rotation of the rotor (2) is induced by the shaft (32) by way of a freewheel device (31). The shaft (32) coaxially crosses the hollow support (33) and transmits motion to the metering screw (3).
**Figure 4** shows a vertical cross section of the valve of Figure 1, wherein the toroidal gasket (11) accommodated in the circumferential recess (12) is visible, the figure highlighting the cross section of the rotor (2) and the compartments featuring a V-shaped cross-section defined by the lobes (24).

### Detailed description of an embodiment of the invention

In a particularly complete embodiment, the valve according to the patent application comprises a tubular body (1) which extends along an (Y) axis, internally to which there is rotationally associated with, according to an (X) axis, a transversal rotor (2), from which two or more lobes (24) radially extend, equally angularly spaced away so as to define compartments featuring a V-shaped cross section; the lobes are configured in such a way that, when they lay in a plane orthogonal to the (Y) axis of the valve, their outer perimeter extends up to the inner surface of said tubular body (1).

The rotor (2) defines a cylindrical inner axial cavity (21) which includes an upper outlet port (22) through which it receives the loose product coming from one of the compartments of said rotor (2) and a lower outlet port (23) from which the product is delivered.

Internally to said cavity (21) there is longitudinally accommodated a metering screw (3) which, in a predetermined angular position of said rotor (2), receives the product through said inlet port (22) and makes it continuously axially move forward along said cavity (21), up to making it go out below through said outlet port (23). The latter is in a more advanced longitudinal position as compared to said inlet port (22), and the longitudinal transfer of the product along the axis of said inner cavity (21) takes place thanks to the transfer action exerted by the metering screw (3).

The outlet port (23) puts the inner cavity (21) in communication with a compartment of the rotor (2) which is in a diametrically opposed position with respect to the compartment wherein the upper inlet port (22) opens.

According to a possible embodiment of the rotary metering valve in accordance with the present invention, the shaft (32) that drives the metering screw (3) coaxially rotates internally to the shaft of the rotor (2), which is a hollow one.

Between the rotor (2) and the metering screw (3) there is interposed a freewheel device (31), by way of which the shaft (32) which makes the metering screw rotate can transfer motion to the shaft (26) of the rotor (2) by rotating in the sense opposed to that which makes the product move forward along the metering screw (3).

According to an advantageous embodiment, one end only of the shaft of the metering screw (3) goes out from the tubular body (1) and the axial development of the cavity (21) is greater than the length of the metering screw (3) so that between the free end of the latter and the end portion of the cavity (21) there is defined an outlet chamber (25) in the lower portion of which the outlet port (23) opens.

In the end portion of the cavity (21) there is accommodated the head (41) of a piston (4) slidingly connected to the rotor (2), which moves between a retracted delivery position and an extended closing position wherein the head (41) of the piston (4) intercepts the flow of the product output from the metering screw (3).

In a particular embodiment the inner surface of the tubular body (1) defines, orthogonally to its own (Y) axis and in correspondence with the (X) axis of said rotor (2), a circumferential recess (12) where there is accommodated a toroidal gasket (11); whenever the inlet port (22) faces upwards, the outer perimeter of at least two diametrically opposed lobes of the rotor (2) engages said toroidal gasket (11) .

In a further embodiment, the interception element interposed between the input of the outlet chamber (25) and the outlet port (23) comprises a cylindrical bowl coaxial to the metering screw (3) received internally to the inner cavity (21). The base of the cylindrical bowl facing the free end of the metering screw (3) is open, whereas the cylindrical lateral surface of the bowl has at least one axially positioned opening in correspondence with a respective outlet port (23) of the rotor (2). The bowl rotates about its own longitudinal axis between a first position wherein the opening on the lateral surface aligns with the outlet port (23) of the rotor (2) and allows the product to flow through, and a second position wherein the opening in the lateral surface of the bowl faces a blind portion of the lateral surface of the inner axial cavity (21) of the rotor (2). Advantageously this embodiment reduces the compression of the residual powder during the closing step.

In a particularly advantageous embodiment, the free end of the metering screw (3) ends internally to said bowl.

## Claims

1. A continuous metering volumetric valve, comprising a tubular body (1) internally to which a transversal rotor (2) is rotationally associated with, said rotor comprising two or more angularly equally spaced lobes (24) radially extending from the shaft (26) of the rotor (2) up to the inner surface of said tubular body (1) so as to define compartments featuring a V-shaped cross-section, **characterized in that** on the inside of the shaft (26) of said rotor (2) an axial cavity (21) is defined, the lateral surface of said shaft (26) having at least one inlet port (22), through which said cavity (21) communicates with a first compartment of said rotor (2), said lateral surface of said shaft (26) also having at least one outlet port (23) to make the product go out from said cavity (21) through a second compartment of said rotor (2) opposite to said first compartment **and in that** internally to said cavity (21) a metering screw (3) is housed which, when said first compartment points towards the inlet of said tubular body (1), receives the product via said at least one inlet port (22) and makes it continuously move forward in an axial direction along said cavity (21), up to making it go out through said at least one outlet port (23) and **in that** said at least one outlet port (23) is located in a longitudinal position that is more advanced with respect to said at least one inlet port (22), so that the longitudinal transfer of the product along the axis of said cavity (21) takes place thanks to the action exerted by said metering screw (3).

2. A valve according to claim 1, **characterized in that** said second compartment of said rotor (2) is diametrically opposite to said first compartment.

3. A valve according to claim 1 or 2, **characterized in that** the shaft (32) that drives said metering screw (3) rotates coaxially internally to said shaft (26) of said rotor (2).

4. A valve according to claim 3, **characterized in that** between said rotor (2) and said metering screw (3) there is interposed a freewheel device (31) through which the shaft (32) that drives the metering screw can transfer motion to said shaft (26) of said rotor (2) by rotating in a sense opposed to that which makes the product move forward in said metering screw (3).

5. A valve according to any of the previous claims, **characterized in that** one end only of the shaft of said metering screw (3) protrudes from said tubular body (1) and **in that** the axial development of said cavity (21) is greater than the length of said metering screw (3) so that between the free end of the latter and the terminal portion of said cavity (21) an outlet chamber is defined (25) wherein said outlet port (23) opens.

6. A valve according to claim 5, **characterized in that** in the terminal portion of said cavity (21) there is housed the head (41) of a piston (4) slidingly connected to said rotor (2), movable between a retracted outlet position and an extended closing position.

7. A valve according to claim 5 **characterized in that** in the terminal portion of said cavity (21) is accommodated an interception element for intercepting the flow of the product.

8. A valve according to claims 6 and 7, **characterized in that said interception element is said head (41) of said piston that,** in the extended closing position, intercepts the flow of product leaving said metering screw (3).

9. A valve according to any of the previous claims, **characterized in that** the inner surface of said tubular body (1), orthogonally to its own axis (Y) and in correspondence with the axis (X) of said rotor (2), defines a circumferential slot (12) wherein a toroidal gasket (11) is housed; whenever said inlet port (22) faces upwards, the external perimeters of at least two diametrically opposed lobes of said rotor (2) engage said toroidal gasket (11).

10. A valve according to any of the previous claims, **characterized in that** the lower portion of said tubular body (1) is decomposable to make the insertion of the rotor (2) easier.

11. A valve according to claim 7 **characterized in that** said interception element is a bowl rotationally movable about the same axis as said metering screw (3), having its base facing the free end of the metering screw (3) open and at least one opening on the cylindrical surface, in correspondence with at least one angular position of said bowl said opening aligning with the outlet port (23) of said rotor (2).

## Patentansprüche

1. Kontinuierliches Dosiervolumenventil, umfassend einen rohrförmigen Körper (1), innerhalb dessen ein Querrotor (2) drehbar damit assoziiert ist, wobei der Rotor zwei oder mehrere winklig gleich beabstandete Loben (24) umfasst, die sich radial von der Welle (26) des Rotors (2) bis zur Innenfläche des rohrförmigen Körpers (1) erstrecken, um Unterteilungen mit einem V-förmigen Querschnitt zu definieren, **dadurch gekennzeichnet, dass** an der Innenseite der Welle (26) des Rotors (2) ein axialer Hohlraum (21) definiert ist, wobei die Seitenfläche der Welle (26) mindestens eine Einlassöffnung (22) aufweist, durch die der Hohlraum (21) mit einer ersten Unterteilung des Rotors (2) kommuniziert, wobei die Seitenfläche der Welle (26) auch mindestens eine Auslassöffnung (23) aufweist, damit das Produkt aus dem Hohlraum (21) durch eine zweite Unterteilung des Rotors (2) ausläuft, die der ersten Unterteilung gegenüberliegt, und dadurch, dass eine Dosierschnecke (3) innerhalb des Hohlraums (21) untergebracht ist, die, wenn die erste Unterteilung dem Einlass des röhrenförmigen Körpers (1) gerichtet ist, das Produkt über die mindestens eine Einlassöffnung (22) empfängt und bewirkt, dass es sich kontinuierlich in einer axialen Richtung entlang des Hohlraums (21) vorwärts bewegt, bis es durch die mindestens eine Auslassöffnung (23) ausläuft, und dadurch, dass die mindestens eine Auslassöffnung (23) in einer Längsposition angeordnet ist, die in Bezug auf die mindestens eine Einlassöffnung (22) weiter vorgeschoben ist, so dass die Längsübertragung des Produkts entlang der Achse des Hohlraums (21) aufgrund der von der Dosierschnecke (3) ausgeübten Wirkung erfolgt.

2. Ventil nach Anspruch 1, **dadurch gekennzeichnet, dass** die zweite Unterteilung des Rotors (2) der ersten Unterteilung diametral gegenüberliegt.

3. Ventil nach Anspruch 1 oder 2, **dadurch gekennzeichnet, dass** sich die die Dosierschnecke (3) antreibende Welle (32) koaxial innerhalb der Welle (26) des Rotors (2) dreht.

4. Ventil nach Anspruch 3, **dadurch gekennzeichnet, dass** zwischen dem Rotor (2) und der Dosierschnecke (3) eine Freilaufeinrichtung (31) angeordnet ist, durch die die die Dosierschnecke antreibende Welle (32) eine Bewegung auf die Welle (26) des Rotors (2) übertragen kann, durch Drehen in einer Richtung, die der entgegengesetzt ist, die das Produkt in der Dosierschnecke (3) vorwärtsbewegt.

5. Ventil nach einem der vorhergehenden Ansprüche, **dadurch gekennzeichnet, dass** nur ein Ende der Welle der Dosierschnecke (3) aus dem rohrförmigen Körper (1) herausragt, und dadurch, dass die axiale Erstreckung des Hohlraums (21) größer ist als die Länge der Dosierschnecke (3), so dass zwischen deren freiem Ende und dem Endabschnitt des Hohlraums (21) eine Auslasskammer (25) definiert ist, in der sich die Auslassöffnung (23) öffnet.

6. Ventil nach Anspruch 5, **dadurch gekennzeichnet, dass** in dem Endabschnitt des Hohlraums (21) der Kopf (41) eines Kolbens (4) untergebracht ist, der gleitend mit dem Rotor (2) verbunden ist und zwischen einer zurückgezogenen Auslassposition und einer ausgefahrenen Schließposition bewegbar ist.

7. Ventil nach Anspruch 5, **dadurch gekennzeichnet, dass** in dem Endabschnitt des Hohlraums (21) ein Abfangelement zum Abfangen des Produktflusses aufgenommen ist.

8. Ventil nach den Ansprüchen 6 und 7, **dadurch gekennzeichnet, dass** das Abfangelement der Kopf (41) des Kolbens ist, der in der ausgefahrenen Schließposition den Produktfluss, der die Dosierschnecke (3) verlässt, abfängt.

9. Ventil nach einem der vorhergehenden Ansprüche, **dadurch gekennzeichnet, dass** die Innenfläche des rohrförmigen Körpers (1) orthogonal zu seiner eigenen Achse (Y) und an der Achse (X) des Rotors (2) einen Umfangsschlitz (12) definiert, in dem eine Ringdichtung (11) untergebracht ist; immer wenn die Einlassöffnung (22) nach oben zeigt, greifen die Außenumfänge von mindestens zwei diametral gegenüberliegenden Loben des Rotors (2) in die Ringdichtung (11) ein.

10. Ventil nach einem der vorhergehenden Ansprüche, **dadurch gekennzeichnet, dass** der untere Abschnitt des rohrförmigen Körpers (1) zerlegbar ist, um das Einsetzen des Rotors (2) zu erleichtern.

11. Ventil nach Anspruch 7, **dadurch gekennzeichnet, dass** das Abfangelement eine Schale ist, die um die gleiche Achse wie die Dosierschnecke (3) in Drehung bewegbar ist, wobei deren Basis dem freien Ende der Dosierschnecke (3) offen zugewandt ist und mindestens eine Öffnung auf der zylindrischen Oberfläche an mindestens einer Winkellage der Schale aufweist, wobei die Öffnung mit der Auslassöffnung (23) des Rotors (2) ausgerichtet ist.

## Revendications

1. Soupape volumétrique de dosage continu, comprenant un corps tubulaire (1) à l'intérieur duquel un rotor transversal (2) est associé d'une manière rotationnelle, ledit rotor comprenant deux ou plusieurs lobes (24) également espacés angulairement entre eux s'étendant radialement de l'arbre (26) du rotor (2) jusqu'à la surface intérieure dudit corps tubulaire (1) de telle sorte à définir des compartiments ayant une section transversale à forme de V, **caractérisée en ce qu'**à l'intérieur de l'arbre (26) dudit rotor (2) une cavité axiale (21) est définie, la surface latérale dudit arbre (26) ayant au moins une porte d'entrée (22), à travers laquelle ladite cavité (21) communique avec un premier compartiment dudit rotor (2), ladite surface latérale dudit arbre (26) ayant également au moins une porte de sortie (23) pour faire sortir le produit de ladite cavité (21) à travers un deuxième compartiment dudit rotor (2) opposé audit premier compartiment, et **en ce qu'**à l'intérieur de ladite cavité (21) est logée une vis d'Archimède (3) laquelle, lorsque ledit premier compartiment est tourné vers l'entrée dudit corps tubulaire (1), reçoit le produit à travers ladite au moins une porte d'entrée (22) et le fait avancer d'une manière continue dans une direction axiale le long de dite cavité (21), jusqu'à le faire sortir à travers ladite au moins une porte de sortie (23), et **en ce que** ladite au moins une porte de sortie (23) est placée dans une position longitudinale qui est plus avancée par rapport à ladite au moins une porte d'entrée (22), de telle sorte que le transfert longitudinal du produit le long de l'axe de ladite cavité (21) se produit grâce à l'action exercée par ladite vis d'Archimède (3).

2. Soupape selon la revendication 1, **caractérisée en ce que** ledit deuxième compartiment dudit rotor (2) est diamétralement opposé audit premier compartiment.

3. Soupape selon la revendication 1 ou 2, **caractérisée en ce que** l'arbre (32) qui entraîne ladite vis d'Archimède (3) tourne coaxialement à l'intérieur dudit arbre (26) dudit rotor (2).

4. Soupape selon la revendication 3, **caractérisée en ce qu'**entre ledit rotor (2) et ladite vis d'Archimède (3) un dispositif à roue libre (31) est interposé, à travers lequel l'arbre (32) qui entraîne la vis d'Archimède peut transférer le mouvement audit arbre (26) dudit rotor (2) en tournant dans le sens opposé à celui qui fait avancer le produit dans ladite vis d'Archimède (3).

5. Soupape selon l'une quelconque des revendications précédentes, **caractérisée en ce que** seulement une extrémité de l'arbre de ladite vis d'Archimède (3) fait saillie dudit corps tubulaire (1), et **en ce que** le développement axial de ladite cavité (21) est plus élevé que la longueur de ladite vis d'Archimède (3) de telle sorte que, entre l'extrémité libre de celle-ci et la portion terminale de ladite cavité (21), une chambre de sortie (25) est définie, dans laquelle s'ouvre ladite porte de sortie (23).

6. Soupape selon la revendication 5, **caractérisée en ce que** dans la portion terminale de ladite cavité (21) est logée la tête (41) d'un piston (4) relié d'une manière glissante audit rotor (2), mobile entre une position rétractée de sortie et une position étendue de fermeture.

7. Soupape selon la revendication 5, **caractérisée en ce que** dans la portion terminale de ladite cavité (21) est placé un élément d'interception pour intercepter l'écoulement du produit.

8. Soupape selon les revendications 6 et 7, **caractérisée en ce que** ledit élément d'interception est ladite tête (41) dudit piston laquelle, dans la position étendue de fermeture, intercepte l'écoulement du produit sortant de ladite vis d'Archimède (53).

9. Soupape selon l'une quelconque des revendications précédentes, **caractérisée en ce que** la surface intérieure dudit corps tubulaire (1) définit, orthogonalement à son propre axe (Y) et en correspondance de l'axe (X) dudit rotor (2), une rainure circonférentielle (12) dans laquelle est logée une garniture toroïdale (11) ; lorsque ladite porte d'entrée (22) est tournée vers le haut, les périmètres extérieurs d'au moins deux lobes diamétralement opposés dudit rotor (2) engagent ladite garniture toroïdale (11).

10. Soupape selon l'une quelconque des revendications précédentes, **caractérisée en ce que** la portion inférieure dudit corps tubulaire (1) est décomposable pour faciliter l'insertion du rotor (2).

11. Soupape selon la revendication 7, **caractérisée en ce que** ledit élément d'interception est une tasse mobile d'une manière rotationnelle autour du même axe de ladite vis d'Archimède (3), sa base regardant l'extrémité libre de la vis d'Archimède (3) étant ouverte, et au moins une ouverture sur la surface cylindrique, en correspondance d'au moins une position angulaire de ladite tasse, étant alignée avec le trou d'échappement (23) dudit rotor (2).
